Europäisches Patentamt

European Patent Office

Office européen des brevets

(19)

(11) Veröffentlichungsnummer: **0 025 172**
**B1**

(12) EUROPÄISCHE PATENTSCHRIFT

(45) Veröffentlichungstag der Patentschrift:
18.12.85

(51) Int. Cl.⁴: **G 01 C 3/08,** G 03 B 3/10

(21) Anmeldenummer: 80105062.6

(22) Anmeldetag: 26.08.80

(54) Schaltung zur sensorgesteuerten Entfernungsmessung.

(30) Priorität: 10.09.79 DE 2936520

(43) Veröffentlichungstag der Anmeldung:
18.03.81 Patentblatt 81/11

(45) Bekanntmachung des Hinweises auf die Patenterteilung:
18.12.85 Patentblatt 85/51

(84) Benannte Vertragsstaaten:
BE FR GB IT NL

(56) Entgegenhaltungen:
EP - A - 0 025 174
DE - A - 2 756 061
DE - A - 2 800 448

(73) Patentinhaber: Siemens Aktiengesellschaft, Berlin und München Wittelsbacherplatz 2, D-8000 München 2 (DE)

(72) Erfinder: Herbst, Heiner, Dr., Anechostrasse 29a, D-8000 München 82 (DE)
Erfinder: Pfleiderer, Hans-Jörg, Dr., Franz-Krinninger-Weg 23, D.8011 Zorneding (DE)
Erfinder: Grassl, Hans-Peter, Dipl.-Phys., Regina-Ullmann-Strasse 34, D-8000 München 81 (DE)

## Beschreibung

Die Erfindung bezieht sich auf eine Schaltung zur sensorgesteuerten Entfernungsmessung nach dem Oberbegriff des Patentanspruchs 1.

Eine Schaltung dieser Art ist der DE-A-2 800 448 entnehmbar. Dort sind die ersten und zweiten Schieberegister jeweils seriellen Ausgängen der ersten und zweiten Bildsensoren nachgeordnet, was eine serielle Auslesung der Bildsensoren bedingt, die nur eine relativ langsame Entfernungsauswertung gestattet. Eine Digitalisierung der Sensorsignale ist dabei nicht vorgesehen.

Der Erfindung liegt die Aufgabe zugrunde, eine Schaltung der eingangs genannten Art anzugeben, die eine sehr genaue Digitalisierung der Sensorsignale und damit eine genaue Auswertung der maximalen Korrelation der Sensorsignale ermöglicht. Diese Aufgabe wird durch die im Patentanspruch 1 gekennzeichneten Merkmale gelöst.

Der mit der Erfindung erzielbare Vorteil besteht insbesondere darin, dass die Bewerter im gesperrten Zustand der Transfertransistoren von den Stufen der Schieberegister vollständig getrennt sind, so dass die unabhängig von den Kennwerten einzelner Schaltungsteile des Schieberegisters, die mit herstellungsbedingten Toleranzen behaftet sind, auf vorgegebene Spannungswerte rückgesetzt werden können, die zu Beginn der Integrationszeiten für die Sensorelemente an einem oder mehreren Schaltungspunkten der Bewerterschaltungen möglichst genau vorliegen sollen. Die Unteransprüche sind auf bevorzugte Ausgestaltungen und Weiterbildungen der Schaltung nach der Erfindung gerichtet.

Nachfolgend wird die Erfindung anhand der in der Zeichnung dargestellten Ausführungsbeispiele näher erläutert. Dabei zeigt:

Fig. 1 ein erstes Ausführungsbeispiel,

Fig. 2 eine Teilschaltung von Fig. 1,

Fig. 3 Spannungs-Zeit-Diagramme zur Erläuterung der Figuren 1 und 2,

Fig. 4 die Ausgestaltung einer Teilschaltung von Fig. 1,

Fig. 5 eine alternative Schaltung zu Fig. 4,

Fig. 6 eine zweite alternative Schaltung zu Fig. 4,

Fig. 7 ein zweites Ausführungsbeispiel und

Fig. 8 ein drittes Ausführungsbeispiel der Erfindung.

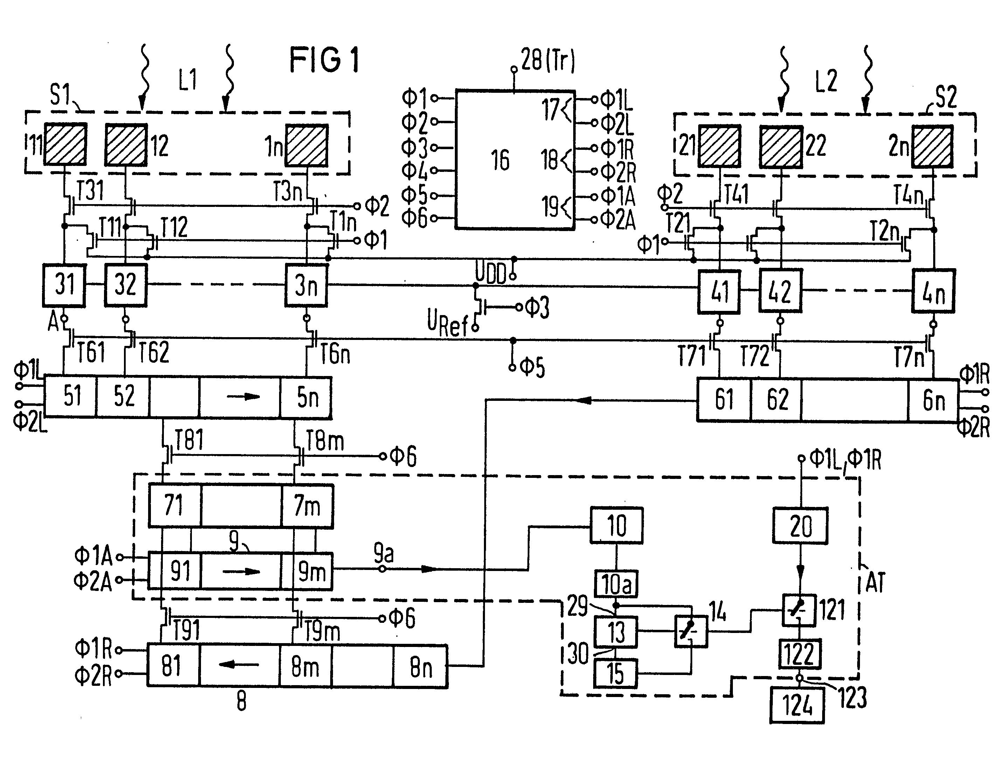

Die in Fig. 1 dargestellte Schaltung enthält zwei lineare Bildsensoren S1 und S2, die mit Sensorelementen 11, 12 ... 1n und 21, 22 ... 2n bestückt sind. Die Bildsensoren S1, S2 sind auf einem dotierten Halbleiterkörper eines ersten Leitfähigkeitstyps integriert. Werden die Sensorelemente als Fotodioden realisiert, so stellen die schraffierten Rechtecke an einer Grenzfläche des Halbleiterkörpers angeordnete Bereiche eines zu dem ersten entgegengesetzten, zweiten Leitfähigkeitstyps dar. Die Sensorelemente 11 ... 1n und 21 ... 2n sind über in Serie geschaltete, individuell zugeordnete Schalttransistoren T11 ... T1n und T31 ... T3n bzw. T21 ... T2n und T41 ... T4n mit einem Anschluss verbunden, der mit einer Konstantspannung $U_{DD}$ beschaltet ist. Die Gateelektroden der Schalttransistoren T11 ... T1n und T21 ... T2n sind jeweils an einen gemeinsamen Anschluss geführt, an dem eine Taktimpulsspannung $\Phi1$ liegt. Die Sensorelemente 11 ... 1n und 21 ... 2n sind andererseits über die Schalttransistoren T31 ... T3n und T41 ... T4n, deren Gateelektroden mit einer gemeinsamen Taktimpulsspannung $\Phi2$ beschaltet sind, mit den Eingängen von Bewertern 31 ... 3n und 41 ... 4n verbunden.

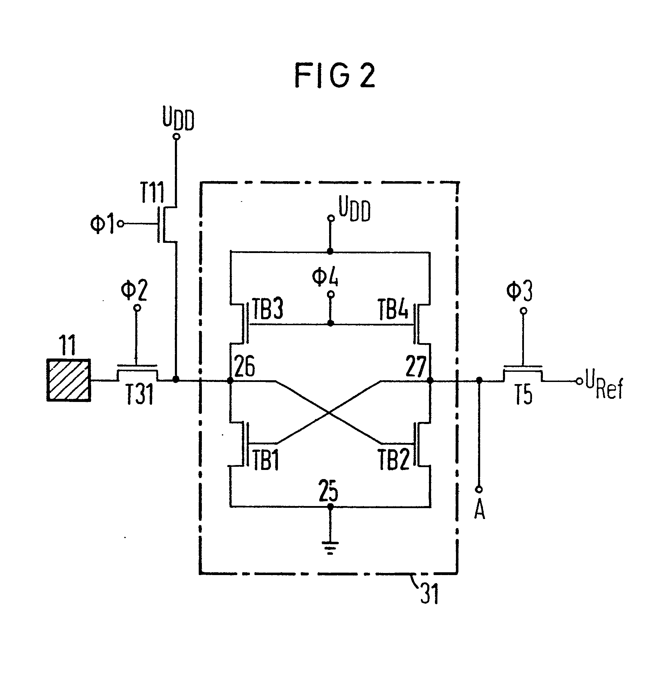

Eine zweckmässige schaltungstechnische Durchbildung der Bewerter 31 ... 3n und 41 ... 4n soll anhand der Fig. 2 noch näher beschrieben werden. Weitere Eingänge dieser Bewerter sind über einen gemeinsamen Schalttransistor T5, dessen Gate mit einer Taktimpulsspannung $\Phi3$ beschaltet ist, an einen Anschluss geführt, der an einer Referenzspannung $U_{Ref}$ liegt. Die Bewerter 31 ... 3n und 41 ... 4n können in Abhängigkeit von den Spannungen, die ihnen über die Schalttransistoren T31 ... T3n und T41 ... T4n zugeführt werden, einen von zwei möglichen Schaltzuständen einnehmen. Ihre an den Ausgängen A auftretenden Ausgangssignale S11 ... S1n und S21 ... S2n, die je nach dem eingenommenen Schaltzustand dem logischen Spannungspegel «1» oder «0» entsprechen, werden über Transfertransistoren T61 ... T6n und T71 ... T7n, deren Gateelektroden mit einer gemeinsamen Taktimpulsspannung $\Phi5$ beaufschlagt sind, den Eingängen der einzelnen Stufen 51, 52 ... 5n und 61, 62 ... 6n zweier den Bildsensoren individuell zugeordneter Schieberegister 5 und 6 zugeführt. Diese sind vorzugsweise als zweiphasige, dynamische Schieberegister ausgebildet. Das Schieberegister 5 weist zwei Eingänge auf, die mit Taktimpulsspannungen $\Phi1L$ und $\Phi2L$ beschaltet sind, während das Schieberegister 6 zwei Eingänge besitzt, denen die Taktimpulsspannungen $\Phi1R$ und $\Phi2R$ zugeführt werden. Die Ausgänge der letzten m Stufen des Schieberegisters 5 sind über Schalttransistoren T81 ... T8m, deren Gateelektroden mit einer Taktimpulsspannung $\Phi6$ beschaltet sind, an die ersten Eingänge einer Gruppe von Bewertern 71 ... 7m geführt. Der Ausgang der Stufe 61 des Schieberegisters 6 ist mit dem Eingang der Stufe 8n eines aus den Stufen 81 ... 8m ... 8n bestehenden Schieberegisters 8 verbunden. Die Ausgänge der Stufen 81 ... 8m sind dabei über Schalttransistoren T91 ... T9m, deren Gateelektroden mit der Taktimpulsspannung $\Phi6$ beschaltet sind, an die zweiten Eingänge der Bewerter 71 ... 7m gelegt. Die Ausgänge 71a ... 7ma dieser Bewerter sind mit den Eingängen der Stufen 91 ... 9m eines Ausleseschieberegisters 9 beschaltet. Dem Schieberegister 8 werden die Taktimpulsspannungen $\Phi1R$ und $\Phi2R$ zugeführt, während das Ausleseschieberegister 9 mit den Taktimpulsspannungen $\Phi1A$ und $\Phi2A$ beaufschlagt ist.

Dem Ausgang 9a des Ausleseschieberegisters ist ein Zähler 10 nachgeschaltet, dessen Ausgang über einen Speicher 10a mit dem ersten Eingang eines digitalen Komparators 13 und über einen elektronischen Schalter 14 mit einem Speicher 15 verbunden ist. Der Ausgang des Speichers 15 ist an einen zweiten Eingang des digitalen Komparators 13 angeschlossen.

Ein Taktimpulsgeber 16 ist mit Ausgängen für die Taktimpulsspannungen $\Phi 1$ bis $\Phi 3$, $\Phi 5$ und $\Phi 6$ versehen. Über weitere Ausgänge 17 und 18 werden die Taktimpulsspannungen $\Phi 1L$, $\Phi 2L$ und $\Phi 1R$, $\Phi 2R$ abgegeben. Der Taktimpulsgeber weist einen weiteren Ausgang 19 auf, an dem die Taktimpulsspannungen $\Phi 1A$ und $\Phi 2A$ abgreifbar sind. Einer der Ausgänge 17 oder 18 ist mit dem Eingang eines Zählers 20 verbunden, dessen Ausgang über einen elektronischen Schalter 121 mit einem Speicher 122 in Verbindung steht. Der Ausgang 123 des Speichers 122 ist mit einer weiter unten beschriebenen Vorrichtung 124 beschaltet.

Fig. 2 zeigt eine zweckmässige Ausgestaltung der Bewerter 31 ... 3n und 41 ... 4n anhand des Bewerters 31. Er besteht aus einer Flip-Flop-Schaltung mit den Schalttransistoren TB1 und TB2 und den als schaltbare Lastelemente betriebenen Transistoren TB3 und TB4. Die Source-Anschlüsse von TB1 und TB2 sind über einen gemeinsamen Anschluss 25 an das Bezugspotential der Schaltung angeschlossen, die Drainanschlüsse von TB3 und TB4 über einen gemeinsamen Anschluss an die Konstantspannung $U_{DD}$. Der Eingangsknoten des Bewerters 31 ist mit 26 bezeichnet, der Ausgangsknoten mit 27. Zwischen den Gateelektroden von TB1 und TB2 und den Knoten 27 und 26 besteht eine Kreuzkopplung. Die Gateelektroden von TB3 und TB4 sind über einen gemeinsamen Anschluss mit einer Taktimpulsspannung $\Phi 4$ beschaltet. Die an die Knoten 26 und 27 angeschlossenen Schaltungsteile A, T11, 11, T31 und T5 wurden bereits anhand der Fig. 1 beschrieben.

Das bei der Erfindung verwendete Prinzip der Entfernungsmessung eines Gegenstandes geht davon aus, dass von diesem über zwei optische Einrichtungen zwei getrennte Abbildungen gewonnen werden, deren entfernungsabhängige Relativpositionen ausgewertet werden. Die Lichtstrahlen L1 in Fig. 1 gehen dabei von dem in seiner Entfernung zu bestimmenden Gegenstand aus. Sie projizieren über eine erste optische Einrichtung eine Abbildung desselben in der Weise auf die Ebene des Bildsensors S1, dass dieser auf einen bestimmten Zeilenausschnitt der Abbildung ausgerichtet ist. In analoger Weise projizieren die Lichtstrahlen L2, die über eine zweite optische Einrichtung von dem Gegenstand gewonnen werden, eine zweite Abbildung desselben auf die Ebene des Bildsensors S2, und zwar derart, dass dieser auf den gleichen Zeilenausschnitt gerichtet ist, wenn sich der Gegenstand in einem vorgegebenen Abstand, z.B. im Abstand «unendlich» befindet. Verändert sich der Abstand des Gegenstandes gegenüber dem vorgegebenen Wert, so verschieben sich die auf die Bildsensoren S1 und S2 projizierten Zeilenausschnitte dementsprechend in Längsrichtung der Bildsensoren. Die Grösse der gegenseitigen Verschiebung stellt dabei ein Mass für die tatsächliche Entfernung des Gegenstandes dar. Eine ähnliche Methode der Entfernungsmessung, bei der die vorstehend beschriebenen relativen Verschiebungen zweier Abbildungen des Gegenstandes ausgenutzt werden, aber anstelle von linearen Bildsensoren flächenhafte Anordnungen von Fotodioden vorgesehen sind, ist beispielsweise aus der Zeitschrift «Electronics» vom 10.11.1977, Seiten 40 bis 44, bekannt.

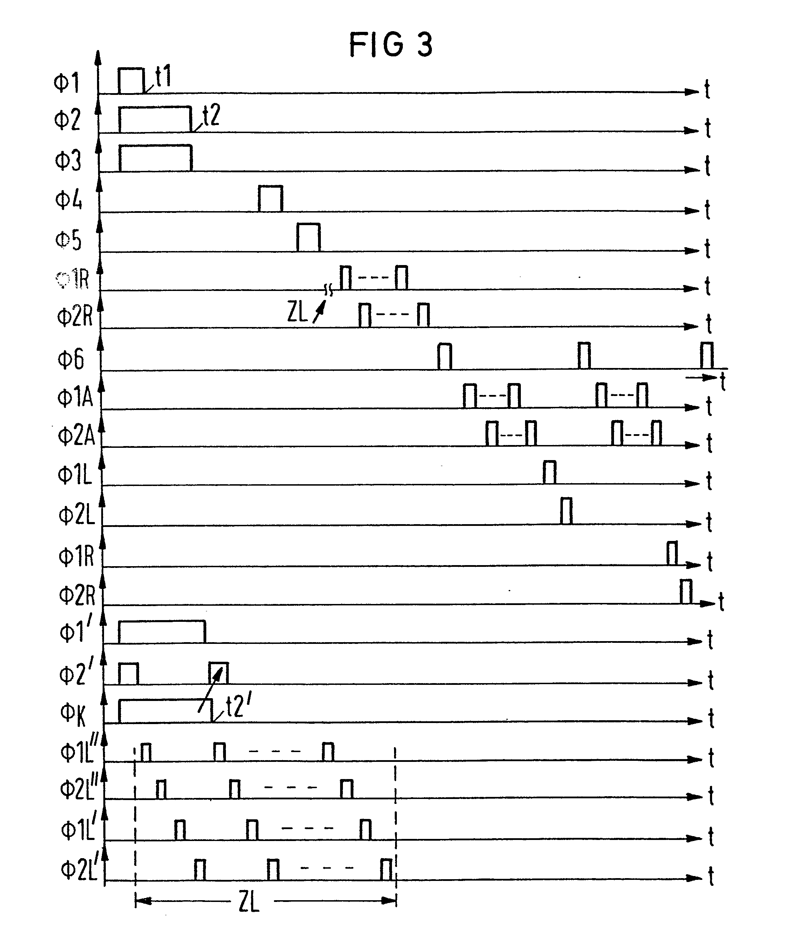

Die Wirkungsweise der Schaltung nach den Figuren 1 und 2 ergibt sich in Verbindung mit den Impuls-Zeit-Diagrammen nach Fig. 3. Wird einem Eingang 28 des Taktimpulsgebers 16 ein Triggerimpuls Tr zugeführt, so gibt dieser zunächst Taktimpulse $\Phi 1$ und $\Phi 2$ ab. Damit werden die Sensorelemente, z.B. 11, und die Eingangsknoten der zugeordneten Bewerter, z.B. 26, auf die Konstantspannung $U_{DD}$ rückgesetzt. Ein gleichzeitig beginnender Taktimpuls $\Phi 3$ schaltet T5 in den leitenden Zustand, so dass der Ausgangsknoten 27 auf die Referenzspannung $U_{Ref}$ gelegt wird. Beim Abschalten des Taktimpulses $\Phi 1$ zum Zeitpunkt t1 beginnen sich in den Sensorelementen, z.B. 11, durch die einfallenden Lichtstrahlen L1 bzw. 12 erzeugte Ladungsträger anzusammeln, wobei in den Sensorelementen ein Spannungsabfall entsteht. Je grösser die in den Sensorelementen 11 ... 1n und 21 ... 2n jeweils angesammelten, optisch erzeugten Ladungen sind, desto stärker verringert sich das Potential an den zugeordneten Eingangsknoten, z.B. 26, der Bewerter. Die Zeitspanne zwischen dem Ende des Taktimpulses $\Phi 1$ zum Zeitpunkt t1 und dem vorgegebenen Ende des Taktimpulses $\Phi 2$ zum Zeitpunkt t2 wird als Integrationszeit bezeichnet. Nur innerhalb dieser Zeitspanne sammeln sich optisch erzeugte Ladungen in den Fotodioden an. Nach Beendigung des Taktimpulses $\Phi 2$ und nach Beendigung des Taktimpulses $\Phi 3$ wird ein Taktimpuls $\Phi 4$ an die Gateelektroden von TB3 und TB4 gelegt, so dass die Flipflop-Schaltungen der Bewerter 31 usw. aktiviert werden. An den Ausgangsknoten, z.B. 27, stellt sich für den Fall, dass am Knoten 26 ein solcher Potentialabfall aufgetreten war, dass die Referenzspannung $U_{Ref}$ unterschritten wurde, eine Spannung ein, die etwa der Konstantspannung $U_{DD}$ entspricht (logische «1»). Wird dagegen $U_{Ref}$ durch die Spannung am Knoten 26 nicht unterschritten, so gelangt der Knoten 27 auf ein Potential, das etwa dem Bezugspotential am Anschluss 25 entspricht (logische «0»). Damit gibt jeder Bewerter ein digitalisiertes Sensorsignal, z.B. S11, ab, dessen Wert abhängig ist vom Erreichen oder Nichterreichen einer Bezugsladung in den einzelnen Sensorelementen, die gerade dann vorliegt, wenn das Potential am Knoten 26 zum Zeitpunkt t2 dem Potential des auf die Spannung $U_{Ref}$ rückgesetzten Knotens 27 gleichkommt.

Beim Auftreten eines Taktimpulses $\Phi 5$ werden dann die digitalisierten Sensorsignale, z.B. S11, den Eingängen der zugeordneten Stufen, z.B. 51, der Schieberegister 5 und 6 zugeführt und in diesen gespeichert.

Der Taktimpulsgeber 16 liefert anschliessend Taktimpulsfolgen $\Phi 1R$ und $\Phi 2R$, die die in den Schieberegisterstufen 61 ... 6n enthaltenen digitalisierten Sensorsignale S21 ... S2n in die Stufen 81

... 8n verschieben. Beim Auftreten eines Taktimpulses Φ6 werden dann die in den letzten m Stufen des Schieberegisters 5 und die in den Stufen 81 ... 8m enthaltenen Sensorsignale an die ersten und zweiten Eingänge der Bewerter 71 ... 7m geschaltet. Jeder dieser Bewerter, z.B. 71, ist so ausgebildet, dass er das gleichzeitige Anliegen zweier Signale «1» oder das gleichzeitige Anliegen zweier Signale «0» durch ein erstes logisches Ausgangssignal feststellt. Die Nichtübereinstimmung der anliegenden Signale wird durch ein zweites logisches Ausgangssignal festgestellt. Der Bewerter kann auch so ausgebildet sein, dass er sowohl das Anliegen zweier Signale «1» als auch das Anliegen zweier Signale «0» durch das erste logische Ausgangssignal feststellt. In diesem Fall besteht er aus einer Exklusiv-ODER-Schaltung. Zweckmässigerweise sind alle Bewerter 71 ... 7m untereinander gleichartig ausgebildet.

Die logischen Ausgangssignale der Bewerter 71 ... 7m werden in die Stufen 91 ... 9m des Ausleseschieberegisters 9 eingegeben. Anschliessend werden vom Taktimpulsgeber 16 Taktimpulsfolgen Φ1A und Φ2A abgegeben, die eine serielle Auslesung der logischen Ausgangssignale der Bewerter 7m ... 71 am Ausgang 9a bewirken. Diejenigen logischen Ausgangssignale, die eine Übereinstimmung zwischen den an den Bewertereingängen anliegenden Sensorsignalpaaren anzeigen, werden im Zähler 10 gezählt. Dieser gibt ein dem Zählergebnis entsprechendes digitales Signal über den Speicher 10a an den Eingang 29 des digitalen Komparators 13 weiter.

Es folgt eine Verschiebung aller in 5 eingegebenen Sensorsignale um eine Stufe nach rechts, was durch ein vom Taktimpulsgeber 16 abgegebenes Taktimpulspaar Φ1L, Φ2L veranlasst wird. Hierdurch ändert sich die Zuordnung der nach dem Auftreten eines Taktimpulses Φ6 in die Bewerter 71 ... 7m eingegebenen Sensorsignale entsprechend. Es schliesst sich ein neuer Auslesevorgang im Schieberegister 9 an, der durch weitere Taktimpulsfolgen Φ1A, Φ2A ausgelöst wird. Der zuvor auf Null rückgesetzte Zähler 10 stellt neuerlich die Zahl der logischen Ausgangssignale der Bewerter 71 ... 7m, die jeweils eine Übereinstimmung zwischen den an den Bewertereingängen anliegenden Signalpaaren anzeigen, fest und gibt ein dem Zählergebnis entsprechendes digitales Signal über den Speicher 10a an den Eingang 29 weiter. Nach einer Verschiebung der im Schieberegister 8 enthaltenen Sensorsignale um eine Stufe nach links mittels eines Taktimpulspaares Φ1R, Φ2R folgt eine durch einen Taktimpuls Φ6 veranlasste weitere Bewertung der anliegenden Sensorsignalpaare in den Bewertern 71 ... 7m und eine weitere serielle Ausgabe der in diesen Bewertern gebildeten Vergleichsergebnisse, eine Zählung derselben im Zähler 10 und eine Weitergabe des Zählergebnisses an den Eingang 29. Weitere Auslesefolgen und diesen entsprechende Zählergebnisse am Eingang 29 ergeben sich nach abwechselnd vorgenommenen Verschiebungen der Sensorsignale in den Schieberegistern 5 und 8 jeweils um eine Stufe nach rechts bzw. links.

Ist das Zählergebnis, das dem Eingang 29 des digitalen Komparators 13 über den Speicher 10a zugeführt wird, grösser als das an seinem Eingang 30 liegende digitale Signal, so werden die Steuereingänge der Schalter 14 und 121 mit einem Komparatorsignal beaufschlagt, das beide Schalter in einen Schaltzustand bringt, in dem sie die an ihre Eingänge gelegten Signale an den jeweiligen Ausgang übertragen. Von jedem eine 1-Stufen-Verschiebung in den Schieberegistern 5 und 8 bewirkenden Taktimpulspaar Φ1L, Φ2L bzw. Φ1R, Φ2R wird ein Zählimpuls abgeleitet und dem Zähler 20 zugeführt. Beispielsweise kann jeweils einer der Taktimpulse, insbesondere Φ1L und Φ1R, als Zählimpuls verwendet werden. Da der Schalter 121 synchron mit dem Schalter 14 betätigt wird, überträgt er immer beim Auftreten eines grösseren Zählergebnisses am Eingang 29 den jeweiligen Zählerstand von 120 auf den Speicher 122. Damit ist im Speicher 122 nach mehreren 1-Stufen-Verschiebungen in jedem der Schieberegister 5 und 8 ein Zählergebnis gespeichert, das diejenige Informationsverschiebung zwischen den Sensorsignalen der Schieberegister 5 und 8 kennzeichnet, bei der die grösste Anzahl von Übereinstimmungen auftritt. Mit anderen Worten: die Anzahl der im Speicher 122 gespeicherten Zählimpulse gibt diejenige relative Verschiebung der in den Schieberegistern 5 und 8 enthaltenen Sensorsignale ab, bei der eine maximale Korrelation der in den Bewertern 71 ... 7m miteinander verglichenen Sensorsignale besteht.

Das am Ausgang 123 des Speichers 122 auftretende digitale Signal wird einer Vorrichtung 124 zugeführt, die als eine Anzeigevorrichtung aufgefasst werden kann, die nach einer entsprechenden Codierung des digitalen Signals eine digitale oder analoge Anzeige der Entfernung des Gegenstandes liefert. Andererseits kann die Vorrichtung 124 auch aus einer an sich bekannten Einstellvorrichtung einer fotografischen oder elektronischen Kamera bestehen, die den Abstand eines gegenüber einer Bildebene bewegbaren Objektivs so einstellt, dass der Gegenstand auf diese Bildebene scharf abgebildet wird. Eine Vorrichtung dieser Art ist beispielsweise in der deutschen Patentanmeldung P 28 13 915.3 und in der Zeitschrift «Electronics» vom 10. Nov. 1977 auf den Seiten 40 bis 44 beschrieben.

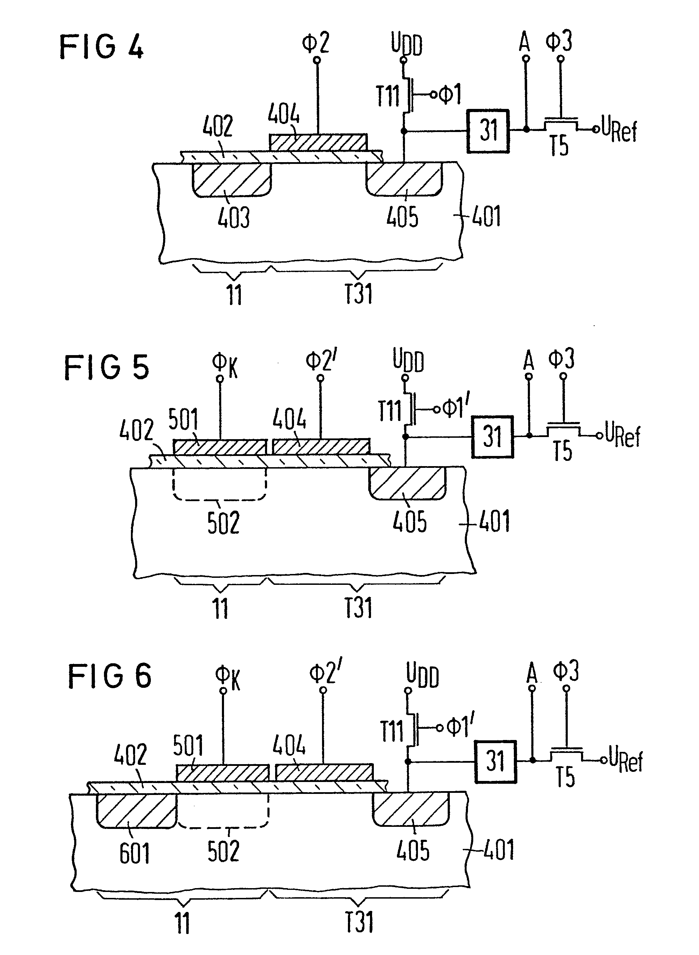

Fig. 4 zeigt eine schaltungstechnische Ausbildung der Sensorelemente 11 ... 1n und 21 ... 2n sowie der angrenzenden Schaltungsteile anhand des Sensorelements 11. Auf einem dotierten Halbleiterkörper 401, z.B. aus aus p-dotiertem Silizium, ist eine dünne, elektrisch isolierende Schicht 402, z.B. aus $SiO_2$, vorgesehen. Der Bildsensor 11 ist hierbei als eine Fotodiode ausgebildet, die aus dem n-dotierten Halbleitergebiet 403 besteht. Dieses Gebiet bildet gleichzeitig auch das Source-Gebiet des Transistors T31 (Fig. 1). Das Gate von T31 ist auf der isolierenden Schicht 402 angeordnet, mit 404 bezeichnet und mit Φ2 beschaltet. Das Draingebiet von T31 trägt das Bezugszeichen 405. Das Gebiet 405 ist einerseits über den Transistor T11 mit einem Anschluss verbunden, der mit der Konstantspannung $U_{DD}$ beschaltet ist, und bildet andererseits den Eingang des Bewerters 31 bzw. das Draingebiet des in diesem vorgesehenen Transistors TB1 (Fig. 1) und das Sourcegebiet des Transistors TB3. Der zweite Eingang von 31 ist entsprechend Fig. 2 über den mit Φ3 beaufschlagten Transistor T5 mit einem Anschluss verbunden, der an der Referenzspannung $U_{Ref}$ liegt. Der mit dem zweiten Eingang des Bewerters 31 zusammenfallende Ausgang A ist in Fig. 4 ebenfalls eingezeichnet.

Eine alternative Schaltung zu Fig. 4 zeigt Fig. 5. Danach besteht das Sensorelement 11 aus einem MIS-Kondensator (Metall-Isolierschicht-Halbleiter-Kondensator), der ein Gate 501 besitzt, das auf der Isolierschicht 402 angeordnet ist. Das Gate 501 ist z.B. aus hochdotiertem, polykristallinen Silizium gefertigt und liegt an einer Taktimpulsspannung $Φ_K$, unter deren Einfluss sich eine Raumladungszone 502 im Halbleiterkörper 401 ausbildet. Die weiteren Schaltungsteile von Fig. 5 entsprechen den mit gleichen Bezugszeichen versehenen Schaltungsteilen von Fig. 4, wobei darauf hingewiesen sei, dass die Transistoren T11 und T31 bei der Schaltung nach Fig. 5 mit Taktimpulsspannungen Φ1′ und Φ2′ beaufschlagt sind. Die gleichzeitig beginnenden Taktimpulse Φ1′, Φ2′ und $Φ_K$ bewirken bis zum Zeitpunkt t1 ein Rücksetzen des MIS-Kondensators im Bereich der Grenzfläche 503 des Halbleiterkörpers 401 etwa auf den Wert der Konstantspannung $U_{DD}$. Zum Zeitpunkt t1 beginnt in dem weiterhin mit $Φ_K$ beaufschlagten MIS-Kondensator die Integrationszeit, in der optisch erzeugte Ladungsträger gesammelt werden. Mit dem Ende von $Φ_K$ zum Zeitpunkt t2′ ist auch das Ende der Integrationszeit erreicht. Kurz vor dem Zeitpunkt t2′ wird ein neuer Taktimpuls Φ2′ angelegt, so dass eine durch den Pfeil 504 (Fig. 3) angedeutete Ladungsübernahme von 11 nach 405 stattfinden kann. Der Taktimpuls Φ1′ muss, wie in Fig. 3 angedeutet ist, vor dieser Ladungsübernahme abgeschaltet werden.

Fig. 6 unterscheidet sich von Fig. 5 lediglich dadurch, dass eine Fotodiode 601 neben dem MIS-Kondensator 501, 502 angeordnet ist, und zwar auf der von T31 abgewandten Seite desselben. Das Gate 404, das Gate von T11 und die Gateelektrode 501 sind entsprechend Fig. 5 mit den Taktimpulsspannungen Φ2′, Φ1′ und $Φ_K$ beschaltet.

Die Kapazität des Sensorelements 11 nach Fig. 5 ist grösser als die Kapazität des Sensorelements nach Fig. 4, während die Kapazität des Sensorelements 11 nach Fig. 6, das sich aus der Fotodiode 601 und dem MIS-Kondensator 501, 502 zusammensetzt, grösser ist als die der Ausgestaltung nach Fig. 5.

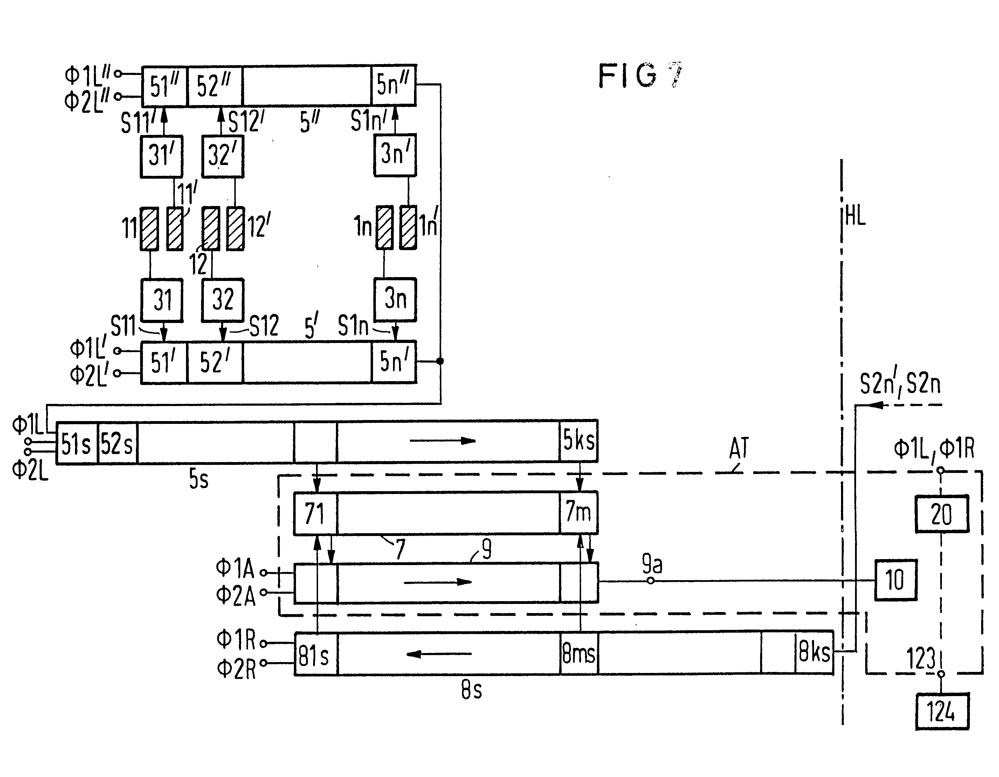

In Fig. 7 ist ein zweites Ausführungsbeispiel der Erfindung dargestellt, bei dem zwei Schaltungen nach Fig. 1 mit einem gemeinsamen Auswerteteil AT und gemeinsamen, diesem nachgeschalteten Vorrichtungen 124 vorgesehen sind. Wesentliche Bestandteile der in Fig. 1 dem ersten linearen Bildsensor zugeordneten Teilschaltung sind in Fig. 7 mit denselben Bezugszeichen versehen. Dabei sind die einzelnen Sensorelemente 11, 12

... 1n in Längsrichtung des Bildsensors 1 so schmal ausgebildet, dass sie etwa der halben Abmessung der Bewerter 31, 32 ... 3n entsprechen. In diese Bewerter wurden der einfachen Darstellung wegen auch die Schalttransistoren T11 usw., T31 usw. und T61 usw. einbezogen. Die entsprechenden Bestandteile der zweiten Schaltung nach Fig. 1 sind in Fig. 7 jeweils mit Bezugszeichen versehen, die durch einen Strich ergänzt sind. Wie ersichtlich ist, sind die Sensorelemente, z.B. 11′, des einen Bildsensors in den Lücken zwischen den Sensorelementen, z.B. 11 und 12, des anderen Bildsensors angeordnet. Bei diesem Ausführungsbeispiel kann auf einer der Fig. 1 entsprechenden Sensorlänge die doppelte Anzahl von Sensorelementen untergebracht werden, so dass die Auflösung der auf die Sensorelemente projizierten Zeilenausschnitte wesentlich grösser ist als in der Schaltung nach Fig. 1.

Die Sensorsignale S11 ... S1n werden aus den Bewertern 31 ... 3n über Transfertransistoren in die Stufen 51′ ... 5n′ eines Schieberegisters 5′ eingegeben, während die Sensorsignale S11′ ... S1n′ aus den Bewertern 31′ ... 3n′ über Transfertransistoren in die Stufen 51″ ... 5n″ eines Schieberegisters 5″ eingegeben werden. Die Ausgänge der Stufen 5n′ und 5n″ sind an den Eingang der Stufe 51s eines Sammel-Schieberegisters 5s gelegt, das insgesamt k = 2n Stufen aufweist. Ein weiteres Sammel-Schieberegister 8s enthält ebenfalls k Stufen. Werden nun die Schieberegister 5′ und 5″ innerhalb des in Fig. 3 angedeuteten Zeitintervalls ZL mit Taktimpulsfolgen Φ1L′, Φ2L′, Φ1L″ und Φ2L′ beaufschlagt, so gelangen die Sensorsignale S1n′, S1n, S1 (n–1)′, S1(n–1) usw. in dieser Reihenfolge in die Stufen 5ks ... 51s. In analoger Weise gelangen die Sensorsignale aus den Sensorelementen 21 ... 2n (Fig. 1) und die Sensorsignale eines weiteren, S2 zugeordneten Sensors S2′ in die k Stufen des Schieberegisters 8s. Die erste in Fig. 3 dargestellte Taktimpulsfolge Φ1R, Φ2R entfällt hierbei, wird jedoch durch Taktimpulsfolgen Φ1R″, Φ2R″, Φ1R′ und Φ2R′, die den Folgen Φ1L″, Φ2L″, Φ1L′ und Φ2L′ entsprechen, ersetzt. Der weitere Vorgang läuft analog zu der Beschreibung der Figuren 1 bis 3 ab, wobei lediglich die Anzahl der ausgewerteten Sensorsignale doppelt so gross ist.

Die in Fig. 7 dargestellte Schaltung ist, wie bereits angedeutet, rechtsseitig von der Linie HL durch eine entsprechende Anordnung zweier weiterer Bildsensoren und der ihnen zugeordneten Bewerter und Schieberegister zu ergänzen, wobei ihre Sensorelemente ebenfalls so schmal ausgebildet sind, dass sie der in Längsrichtung der Bildsensoren gesehenen halben Bewerterbreite entsprechen.

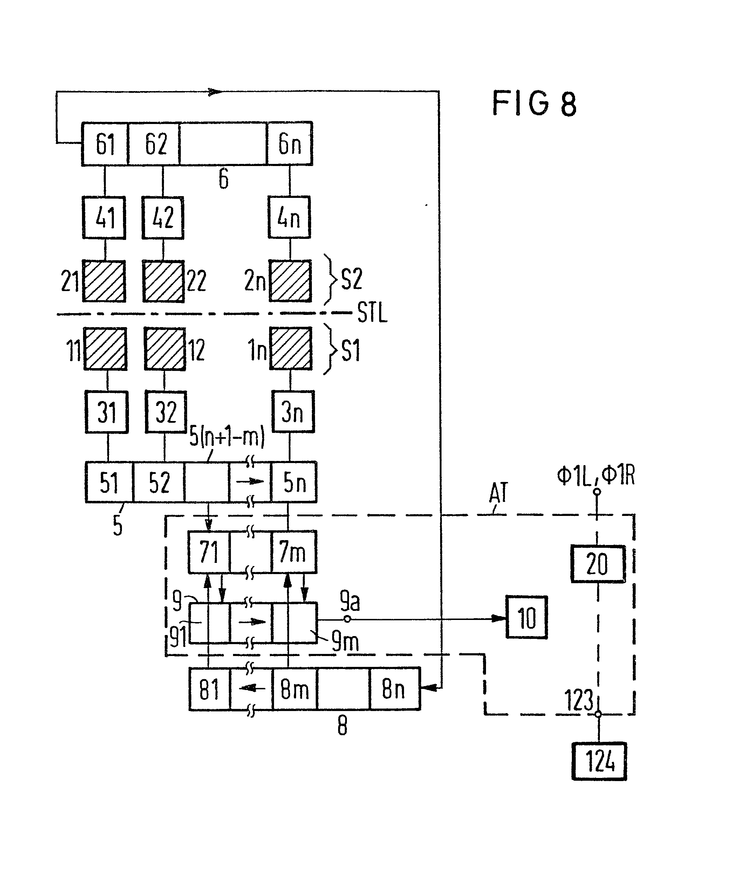

Fig. 8 zeigt schliesslich eine der Fig. 1 entsprechende Schaltung, bei der die Bildsensoren 1 und 2 nebeneinander angeordnet sind, so dass ihre Sensorelemente 11 ... 1n und 21 ... 2n in zwei Zeilen nebeneinander liegen. Die Bewerter 31, 32 ... 3n und 41, 42 ... 4n enthalten jeweils auch die Schalttransistoren T11 usw., T31 usw., T61 usw., T21 usw., T41 usw. und T71 usw. Dieses Ausführungsbeispiel kann herangezogen werden, wenn die Abbildungen des Gegenstandes jeweils nur zur Hälfte auf die Ebene der Bildsensoren von 1 und 2 projiziert werden, wobei die obere Hälfte der einen Abbildung auf den Teil der Bildebene fällt, der oberhalb der Schnittlinie STL liegt, während die untere Hälfte der anderen Abbildung auf den unterhalb der Schnittlinie STL liegenden Teil der Bildebene projiziert wird. Die mittels der Bildsensoren 1 und 2 ausgewerteten Zeilenausschnitte liegen dabei an den jeweiligen Grenzen der Abbildungshälften, die der Linie STL benachbart sind.

Die beschriebenen und dargestellten Schaltungen können mit besonderem Vorteil ganz oder teilweise auf einem dotierten Halbleiterkörper monolithisch integriert werden. Dabei ist der Halbleiterkörper, z. B. 401, vorzugsweise p-leitend ausgebildet und der übrige Schaltungsaufbau in MOS-n-Kanal-Technik ausgeführt. Der Halbleiterkörper liegt auf einem Bezugspotential, wobei die angegebenen Spannungen und Potentiale gegenüber diesem jeweils ein positives Vorzeichen aufweisen. Bei einem n-leitenden Halbleiterkörper und einer MOS-p-Kanal-Technik werden diese Vorzeichen negativ. Die beschriebenen und dargestellten Ausführungsbeispiele weisen im Bereich der Bildsensoren 1 und 2 Blenden auf, in denen Öffnungen vorgesehen sind, durch die eine Belichtung der Sensorelemente erfolgt.

**Patentansprüche**

1. Schaltung zur sensorgesteuerten Entfernungsmessung mit zwei linearen, mit Sensorelementen (11 ... 1n; 21 ... 2n) bestückten Bildsensoren (S1, S2), auf die Ausschnitte einander entsprechender Zeilen zweier von einem Gegenstand getrennt erhaltener Abbildungen projiziert werden, mit einem Auswerteteil, der ein erstes, dem ersten Bildsensor (S1) zugeordnetes Schieberegister (5) und ein zweites, dem zweiten Bildsensor (S2) zugeordnetes Schieberegister (6) sowie eine Gruppe von ersten Bewertern (71 ... 7m) aufweist, die über erste Eingänge mit den Stufen des ersten Schieberegisters (5) verbindbar sind und über zweite Eingänge mit den Stufen des zweiten Schieberegisters (6) in Verbindung stehen, wobei der Auswerteteil die Sensorsignale in Abhängigkeit von unterschiedlichen relativen Positionsverschiebungen bezüglich einer maximalen Korrelation auswertet, und mit einer dem Auswerteteil nachgeschalteten, die Entfernung des Gegenstandes anzeigenden Vorrichtung (124) oder mit einer eine Scharfeinstellung der Abbildung des Gegenstandes auf eine Bildebene bewirkenden Vorrichtung, dadurch gekennzeichnet, dass den Sensorelementen (11 ... 1n, 21 ... 2n) zweite Bewerter (31 ... 3n, 41 ... 4n) nachgeschaltet sind, die in Abhängigkeit vom Überschreiten einer Bezugsladung in den Sensorelementen zwischen zwei unterschiedlichen Schaltzuständen umschaltbar sind, dass die Ausgänge der zweiten Bewerter (31 ... 3n, 41 ... 4n) an die einzelnen Stufen (51 ... 5n, 61 ... 6n) des ersten und zweiten Schieberegisters (5, 6) über Transfertransistoren (T61 ... T6n, T71 ... T7n) angeschaltet sind, dass eine Gruppe von Stufen des ersten Schieberegisters (5) an die ersten Eingänge der ersten Bewerter (71 ... 7m) anschaltbar ist, dass eine Gruppe von Stufen eines Auswahl-Schieberegisters (8), das mit dem zweiten Schieberegister (6) identisch oder mit diesem verbunden ist, an die zweiten Eingänge der ersten Bewerter (71 ... 7m) anschaltbar ist und dass der Ausgang der letzten Stufe (9m) eines mit seinen Eingängen an die ersten Bewerter (71 ... 7m) angeschlossenen Auslese-Schieberegisters (9) mit einem ersten Zähler (10) beschaltet ist, der die Anzahl der Übereinstimmungen der an den Eingängen der ersten Bewerter (71 ... 7m) anliegenden Sensorsignalpaare zählt.

2. Schaltung nach Anspruch 1, gekennzeichnet durch einen mit den Takteingängen der vier Schieberegister (5, 6, 8, 9) verbundenen Taktimpulsgeber (16), der so ausgebildet ist, dass nach jedem Auslesevorgang im Ausleseschieberegister (9) das erste Schieberegister (5) und das Auswahlschieberegister (8) abwechselnd mit den Taktimpulsen einer Taktperiode beaufschlagt werden, so dass das eine gegenüber dem anderen jeweils eine Sensorsignalverschiebung um eine Stufe erfährt.

3. Schaltung nach Anspruch 2, dadurch gekennzeichnet, dass der Ausgang des ersten Zählers (10) einerseits über einen ersten Speicher (10a) mit dem ersten Eingang eines digitalen Komparators (13) und andererseits über einen elektronischen Schalter (14) und einen zweiten Speicher (15) mit dem zweiten Eingang des Komparators (13) verbunden ist, dass ein zweiter Zähler (20) an einen weiteren Ausgang des Taktimpulsgebers (16) geschaltet ist, an dem jeweils einer der Taktimpulse ($\Phi$1L, $\Phi$1R) aus den genannten Taktperioden oder ein von diesen jeweils abgeleiteter Impuls abgreifbar sind, dass der Ausgang des zweiten Zählers (20) über einen zweiten elektronischen Schalter (121) mit einem dritten Speicher (122) verbunden ist, dass beide elektronischen Schalter (14, 121) mit Steuereingängen versehen sind, die an den Ausgang des Komparators (13) geschaltet sind, und dass der Ausgang (123) des dritten Speichers (122) den Ausgang des Auswerteteils (AT) darstellt.

4. Schaltung zur sensorgesteuerten Entfernungsmessung, bestehend aus zwei Schaltungen nach Anspruch 1, mit einem gemeinsamen Auswerteteil und gemeinsamen, diesem nachgeschalteten Vorrichtungen, dadurch gekennzeichnet, dass einander entsprechende Bildsensoren jeweils zu Sensorkombinationen zusammengefasst sind, dass die Sensorelemente (11 ...) jedes Bildsensors in Längsrichtung desselben so bemessen sind, dass sie etwa der halben Abmessung eines zweiten Bewerters (31 ...) in dieser Richtung entsprechen, dass die Sensorelemente (11') eines Bildsensors jeweils in Lücken zwischen den Sensorelementen (11, 12) des mit diesem zusammengefassten angeordnet sind, und dass zwei den jeweils zusammengefassten Bildsensoren individuell zugeordnete Auskopplungs-Schieberegister (5', 5'') mit ihren Ausgängen an den seriellen Eingang eines Sammel-Schieberegisters (5s, 8s) geführt sind, das dem ersten (5) bzw. zweiten Schieberegister (8) entspricht.

5. Schaltung nach einem der Ansprüche 1 bis 3, dadurch gekennzeichnet, dass die beiden Bildsensoren (S1, S2) parallel nebeneinander angeordnet sind und die zweiten Bewerter (31 ... 3n, 41 ... 4n) und die ersten und zweiten Schieberegister (5, 6) jeweils auf der Seite des zugeordneten Bildsensors (S1, S2) liegen.

6. Schaltung nach einem der Ansprüche 1 bis 5, dadurch gekennzeichnet, dass die den Sensorelementen (11 ..., 21 ...) nachgeschalteten zweiten Bewerter (31 ..., 41 ...) jeweils einen Eingang aufweisen, der über einen Schalttransistor (T11 ..., T21 ...) mit einer Konstantspannungsquelle (U$_{DD}$) verbunden ist.

7. Schaltung nach Anspruch 6, dadurch gekennzeichnet, dass die den Sensorelementen (11 ..., 21 ...) nachgeschalteten zweiten Bewerter (31 ..., 41 ...) jeweils einen weiteren Eingang aufweien, der über einen weiteren Schalttransistor (T5) mit einer Referenzspannungsquelle (U$_{Ref}$) verbunden ist.

8. Schaltung nach einem der Ansprüche 1 bis 7, dadurch gekennzeichnet, dass die Sensorelemente als MIS-Kondensatoren (501, 502) ausgebildet sind.

9. Schaltung nach einem der Ansprüche 1 bis 7, dadurch gekennzeichnet, dass die Sensorelemente als Fotodioden (403) ausgebildet sind.

10. Schaltung nach einem der Ansprüche 1 bis 7, dadurch gekennzeichnet, dass die Sensorelemente jeweils aus einem MIS-Kondensator (501, 502) und einer Fotodiode (601) bestehen.

11. Schaltung nach einem der Ansprüche 1 bis 10, dadurch gekennzeichnet, dass sie mit Ausnahme der dem Auswerteteil (AT) nachgeschalteten Vorrichtungen (124) ganz oder teilweise auf einem dotierten Halbleiterkörper (401) monolithisch integriert ist.

12. Schaltung nach einem der Ansprüche 1 bis 10, gekennzeichnet durch die Verwendung in einer fotografischen oder elektronischen Kamera.

**Claims**

1. A circuit for sensor-controlled distance measurement comprising two linear image sensors (S1, S2) equipped with sensor elements (11 ... 1n; 21 ... 2n) and onto which two representations of mutually corresponding sections of lines, which are separately obtained from an object, are projected, and comprising an analysing component which has a first shift register (5) assigned to the first image sensor (S1) and a second shift register (6) assigned to the second image sensor (S2) and which has a group of first analysers (71 ... 7m) which can be connected to the stages of the first shift register (5) by first inputs and to the stages of the second shift register (6) by second inputs, where the analysing component analyses the sensor signals in dependence upon different relative position displacements in respect of a maximal correlation, and comprising a device (124) which follows the analysing component and indicates the distance of the object, or comprising a device which brings about focussing of the representation of the object onto an image plane, characterised in that the sensor elements (11 ... 1n, 21 ... 2n) are followed by second analysers (31 ... 3n, 41 ... 4n) which can be switched over between two different switching positions in dependence upon the surpassing of a reference charge in the sensor elements, that the outputs of the second analysers (31 ... 3n, 41 ... 4n) are connected to the individual stages (51 ... 5n, 61 ... 6n) of the first and second shift register (5, 6) by transfer transistors (T61 ... T6n, T71 ... T7n), that a group of stages of the first shift register (5) can be connected to the first inputs of the first analysers (71 ... 7m), that a group of stages of a selection shift register (8) identical to the second shift register (6) or connected thereto, can be connected to the second inputs of the first analysers (71 ... 7m), and that the output of the last stage (9m) of a read-out shift register (9), which has its inputs connected to the first analysers (71 ... 7m), is connected to a first counter (10) which counts the number of correspondences of the pairs of sensor signals connected to the inputs of the first analysers (71 ... 7m).

2. A circuit as claimed in Claim 1, characterised by a clock pulse generator (16) connected to the clock pulse inputs of the four shift registers (5, 6, 8, 9) and contrived such that following each reading process in the read-out shift register (9) the first shift register (5) and the selection shift register (8) are alternately supplied with the clock pulses of a clock pulse period, so that one is subjected to a sensor signal displacement by one stage in relation to the other one.

3. A circuit as claimed in Claim 2, characterised in that the output of the first counter (10) is connected to the first input of a digital comparator (13) by means of a first store (10a) on the one hand, and is connected to the second input of the comparator (13) by means of an electronic switch (14) on the other hand, and that a second counter (20) is connected to a further output of the clock pulse generator (16), at which one of the clock pulses (Φ1L, Φ1R) from said clock pulse periods or a pulse derived therefrom can respectively be tapped, that the output of the second counter (20) is connected to a third store (122) by means of a second electronic switch (121), that both electronic switches (14, 121) are provided with control inputs connected to the output of the comparator (13), and that the output (123) of the third store (122) constitutes the output of the analysing component (AT).

4. A circuit for sensor-controlled distance measurement consisting of two circuits as claimed in Claim 1 with a common analysing component and common devices which precede the analysing component, characterised in that mutually corresponding image sensors are respectively combined to form sensor combinations, that the sensor elements (11 ...) of each image sensor are dimensioned in the longitudinal direction thereof in such a manner that they approximately correspond to half the size of a second analyser (31 ...) in this direction, that the sensor elements (11') of an image sensor are respectively arranged in gaps between the sensor elements (11, 12) of the associated sensor of the combination, and that two output coupling shift registers (5', 5'') individually assigned to the respectively combined image sensors, have their outputs connected to the serial input of a collective shift register (5s, 8s) which corresponds to the first (5) and the second shift register (8).

5. A circuit as claimed in one of Claims 1 to 3, characterised in that the two image sensors (S1, S2) are arranged parallel to one another and the second analysers (31 ... 3n, 41 ... 4n) and the first and second shift registers (5, 6) are respectively arranged on the side of the assigned image sensor (S1, S2).

6. A circuit as claimed in one of Claims 1 to 5, characterised in that the second analysers (31 ..., 41 ...) connected following the sensor elements (11 ..., 21 ...) respectively have an input connected to a constant voltage source ($U_{DD}$) by a switching transistor (T11 ..., T21 ...).

7. A circuit as claimed in Claim 6, characterised in that the second analysers (31 ..., 41 ...) connected following the sensor elements (11 ..., 21 ...) respectively have a further input which is connected to a reference voltage source ($U_{Ref}$) by a further switching transistor (T5).

8. A circuit as claimed in one of Claims 1 to 7, characterised in that the sensor elements are constructed as MIS capacitors (501, 502).

9. A circuit as claimed in one of Claims 1 to 7, characterised in that the sensor elements are constructed as photo-diodes (403).

10. A circuit as claimed in one of Claims 1 to 7, characterised in that the sensor elements respectively consist of an MIS-capacitor (501, 502) and a photo-diode (601).

11. A circuit as claimed in one of Claims 1 to 10, characterised in that with the exception of the device (124) connected following the analysing component (AT), it is completely or partially monolithically integrated on a doped semiconductor body (401).

12. A circuit as claimed in one of Claims 1 to 10, characterised by use in a photographic or electronic camera.

**Revendications**

1. Circuit pour la mesure de distance, commandé par des détecteurs, avec deux détecteurs linéaires d'images (S1, S2) pourvus d'éléments-détecteurs (11 ... 1n; 21 ... 2n) sur lesquels sont projetées des sections de lignes, qui se correspondent, de deux images d'un objet obtenues séparément, avec une partie-évaluation qui comporte un premier registre à décalage (5) associé au premier détecteur d'image (S1) et un second registre à décalage (6) associé au second détecteur d'image (S2) ainsi qu'un groupe de premiers dispositifs de pondération (71 ... 7m) qui sont, par l'intermédiaire de premières entrées, susceptibles d'être reliés aux étages du premier registre à décalage (5) et sont reliés, par l'intermédiaire de secondes entrées, aux étages du second registre à décalage (6), la partie-évaluation évaluant les signaux des détecteurs en fonction de décalage relatifs différents par rapport à une corrélation maximale, et avec un dispositif (124) monté en aval de la partie-évaluation et indiquant la distance de l'objet ou avec un dispositif opérant la mise au point de l'image de l'objet dans un plan d'image, caractérisé par le fait qu'en aval des éléments de détection (11 ... 1n, 21 ... 2n) sont montés des seconds dispositifs de pondération (31 ... 3n, 41 ... 4n) qui sont, en fonction du dépassement d'une charge de référence dans les éléments de détection, susceptibles d'être commutés entre deux positions de commutation différentes, que les sorties du second dispositif-évaluateur (31 ... 3n, 41 ... 4n) sont reliées aux différents étages (51 ... 5n, 61 ... 6n) du premier et du second registres à décalage (5, 6) par l'intermédiaire de transistors de transfert (T61 ... T6n, T71 ... T7n), qu'un groupe d'étages du premier registre à décalage (5) est relié aux premières entrées du premier dispositif de pondération (71 ... 7m), qu'un groupe d'étages d'un registre à décalage de sélection (8) qui est identique au second registre à décalage (6) ou qui est relié à ce dernier, est susceptible d'être relié aux secondes entrées du premier dispositif de pondération (71 ... 7m), et que la sortie du dernier étage (9m) d'un registre à décalage de sélection (9) qui est reliée par ses entrées aux premiers dispositifs de pondération (71 ... 7m), est reliée à un premier compteur (10) qui compte le nombre de coïncidences des paires de signaux de détecteurs qui sont présentes aux entrées du premier dispositif de pondération (71 ... 7m).

2. Circuit selon la revendication 1, caractérisé par un générateur d'impulsions de cadence (16) qui est relié aux entrées de cadence des quatre registres à décalage (5, 6, 8, 9), et qui est réalisé de telle façon qu'après chaque opération de lecture dans le registre à décalage de lecture (9), le premier registre à décalage (9) et le registre à décalage de sélection (8) sont chargés alternativement avec les impulsions de cadence d'une période de cadence, de manière que l'un subisse par rapport à l'autre un décalage du signal de détecteur.

3. Circuit selon la revendication 2, caractérisé par le fait que la sortie du premier compteur (10) est reliée d'une part et par l'intermédiaire d'une première mémoire (10a), avec la première entrée d'un comparateur numérique (13) et, d'autre part et par l'intermédiaire d'un commutateur électronique (14) et d'une seconde mémoire (15), avec la seconde entrée du comparateur (13), qu'un second compteur (20) est relié à une seconde sortie du générateur d'impulsions de cadence (16), au niveau de laquelle peut être prélevée l'une des impulsions de cadence ($\Phi$1L, $\Phi$1R) parmi lesdites périodes de cadence ou une impulsion susceptible d'être déduite de ces dernières, que la sortie du second compteur (20) est reliée, par l'intermédiaire d'un second commutateur électronique (121), à une troisième mémoire (22), que les deux commutateurs électroniques (14, 121) sont pourvus d'entrées de commande qui sont reliées à la sortie du comparateur (13), et que la sortie (123) de la troisième mémoire (122), représente la sortie de la partie-évaluation (AT).

4. Circuit pour la mesure de distance, commandé par des détecteurs, constitués par deux circuits selon la revendication 1, avec une partie-évaluation commune et des dispositifs communs montés en aval à ladite partie-évaluation, caractérisé par le fait que des détecteurs d'image qui se correspondent sont rassemblés pour former des combinaisons de détecteurs, que les éléments-détecteurs (11 ...) de chaque détecteur d'image sont dimensionnés, dans la direction longitudinale de celui-ci, de façon à correspondre à peu près à la demi-dimension d'un second dispositif de pondération (31 ...), dans cette direction, que les éléments-détecteurs (11') d'un détecteur d'image sont respectivement disposés dans des intervalles entre deux éléments-détecteurs (11, 12) associés à celui-ci, et que deux registres à décalage de découplage (5', 5'') qui sont associés individuellement aux détecteurs d'image assemblés, sont reliés, par leur sortie, à l'entrée série d'un registre à décalage collectif (5s, 8s) qui correspond au premier (5) ou au second registre à décalage (8).

5. Circuit selon l'une des revendications 1 à 3, caractérisé par le fait que les deux détecteurs d'image (S1, S2) sont disposés parallèlement entre eux, et les seconds dispositifs de pondération (31 ... 3n, 41 ... 4n) et les premiers et les seconds registres à décalage (5, 6) sont respectivement situés du côté des détecteurs d'image associés (S1, S2).

6. Circuit selon l'une des revendications 1 à 5, caractérisé par le fait que les seconds dispositifs de pondération (31 ..., 41 ...), qui sont montés en aval des éléments-détecteurs (11 ..., 21 ...), comportent, respectivement, une entrée qui est reliée, par l'intermédiaire d'un transistor de commutation (T11 ..., T21 ...), à une source de tension constante ($U_{DD}$).

7. Circuit selon la revendication 6, caractérisé par le fait que les seconds dispositifs de pondération (31 ..., 41 ...) qui sont montés en aval des éléments-détecteurs (11 ..., 21 ...), comportent, respectivement, une seconde entrée qui est reliée, par l'intermédiaire d'un autre transistor de commutation (T5), à une source de tension de référence ($U_{Ref}$).

8. Circuit selon l'une des revendications 1 à 7, caractérisé par le fait que les éléments-détecteurs sont réalisés sous la forme de condensateurs MIS (501, 502).

9. Circuit selon l'une des revendications 1 à 7, caractérisé par le fait que les éléments-détecteurs sont réalisés sous la forme de photodiodes (403).

10. Circuit selon l'une des revendications 1 à 7, caractérisé par le fait que les éléments-détecteurs sont respectivement constitués par un condensateur MIS (501, 502) et par une photodiode (601).

11. Circuit selon l'une des revendications 1 à 10, caractérisé par le fait qu'à l'exception des dispositifs (124) qui sont montés en aval de la partie-évaluation (AT), il est totalement ou partiellement intégré monolithiquement sur un corps semiconducteur dopé (401).

12. Circuit selon l'une des revendications 1 à 10, caractérisé par la mise en œuvre dans une caméra photographique ou électronique.

FIG 1

# FIG 2

FIG 3

**FIG 4**

**FIG 5**

**FIG 6**

FIG 7

# FIG 8